# DEMANDE DE BREVET EUROPEEN

(11) **EP 1 930 765 A1**
(43) Date de publication de la demande: **11.06.2008**
(21) Numéro de dépôt: 07290237.2
(22) Date de dépôt: 23.02.2007
(51) Int. Cl.: G02C 5/00, G02C 7/00, G02C 7/10

(54) **Lunettes pour réduire la fatigue visuelle**

(30) Priorité: 08.12.2006 FR 0655384
(71) Demandeur: Société de Gestion de Marques Sogema, 01100 Arbent (FR)
(72) Inventeur: Fargier, Yves, 69006 Lyon (FR); Lamy, Patrick, 64600 Anglet (FR)
(74) Mandataire: Bredema

(57) **Abrégé**

La présente invention concerne des lunettes pour réduire la fatigue visuelle lors du travail sur écran informatique par un sujet ne souffrant pas de troubles oculaires pathologiques, comportant deux oculaires teintés de puissance optique faible, caractérisées en ce que lesdits oculaires présentent une puissance comprise entre +0,15 dioptrie et -0,30 dioptrie et une teinte brunale dont le coefficient de transmission pour les longueurs d'ondes inférieures à 430 nanomètres est inférieur à 60%, et un facteur de transmission total dans le spectre visible d'environ 74%, l'oculaire étant réalisé en polycarbonate avec un traitement anti-reflet trois couches et revêtu d'un vernis anti-rayure siliconé.

## Description

La présente invention concerne le domaine des lunettes d'ordinateur, c'est-à-dire des lunettes destinées non pas à corriger des troubles de la vue (amétropies, astigmatisme, myopie, hypermétropie, presbytie), mais à réduire la fatigue visuelle pendant l'exécution d'un travail devant un écran d'ordinateur par un sujet ne souffrant d'aucune pathologie ophtalmologique.

Il est connu d'utiliser des lunettes monofocales ou unifocales assurant une correction visuelle appropriée à la distance séparant les yeux de l'écran et facilitant la mise au point sur un écran de visualisation (ou écran d'ordinateur) généralement disposé à une plus grande distance de l'oeil que les documents imprimés. Ce type de lunettes permet de voir la totalité de l'écran tout en réduisant au minimum les mouvements de la tête de haut en bas.

La fatigue liée au travail sur écran est directement proportionnelle au temps passé devant sa console mais également à la qualité de la vision de l'observateur. Si le temps de travail sur écran est trop long, la fatigue peut apparaître du fait de la focalisation sur l'écran mais aussi du niveau d'intensité et de contraste de l'écran.

On connaît dans l'état de la technique le brevet américain US6709101 décrivant des lunettes destinées éviter la fatigue des muscles oculaires mettant en oeuvre des verres en polycarbonate teintés de type « lentilles planes» dont la puissance optique est d'environ +0,50 dioptrie.

Cette solution n'est pas totalement satisfaisante, car la convergence résultant de telles lunettes prive l'oeil de tout effort d'accommodation. Lorsque les lunettes sont retirées, un temps de latence est requis pour accoutumer à nouveau l'oeil à la lecture à des distances de quelques dizaines de centimètres. Par ailleurs, les phénomènes de contraste et de luminosité ne sont que partiellement traités et la fatigue visuelle subsiste.

L'objet de la présente invention est de remédier à cet inconvénient en proposant des lunettes d'ordinateur améliorées.

A cet effet, l'invention concerne selon son acceptation la plus générale des lunettes pour réduire la fatigue visuelle lors du travail sur écran informatique par un sujet ne souffrant pas de troubles oculaires pathologiques, comportant deux oculaires teintés de puissance optique faible, caractérisés en ce que lesdits oculaires présentent une puissance comprise entre +0,15 dioptrie et +0,30 dioptrie et une teinte brunale dont le coefficient de transmission pour les longueurs d'ondes inférieures à 430 nanomètres est inférieur à 60%, et un facteur de transmission total dans le spectre visible d'environ 74%, l'oculaire étant réalisé en polycarbonate avec un traitement anti-reflet trois couches et revêtu d'un vernis anti-rayure siliconé.

De préférence, le coefficient de transmission est respectivement d'environ 105% pour le rouge, de 102% pour le jaune, de 99% pour le vert et de 100% pour le bleu.

Avantageusement, le coefficient de transmission est d'environ 80% pour le spectre compris entre 500 et 650 nanomètres.

Selon un mode de mise en oeuvre avantageux, lesdits oculaires présentent une puissance d'environ +0,25 dioptrie.

Selon une variante, lesdits oculaires présentent une puissance inférieure à +0,20 dioptrie.

L'invention sera mieux comprise à la lecture de la description qui suit, se référant au dessin annexé où :

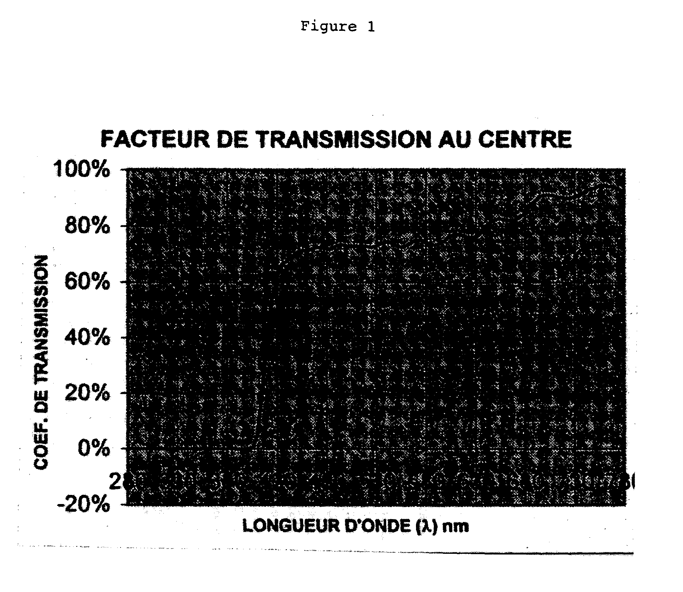

- la figure 1 représente la courbe de variation du facteur de transmission au centre d'un oculaire selon l'invention en fonction de la longueur d'onde.

L'invention concerne selon un exemple non limitatif de réalisation des lunettes formées par une monture de type connu, équipée de deux oculaires monofocales. Les oculaires sont constitués en polycarbonate d'une épaisseur de deux millimètres, présentant une teinte brunale avec une coupure en dessous de 430 nanomètres, où le taux de transmission devient inférieur à 60%, le coefficient de transmission en dessous de 400 nanomètres étant inférieur à 20%.

L'oculaire est traité antireflet avec trois couches et un vernis anti-rayures siliconé.

La figure 1 représente la variation du facteur de transmission au centre de l'oculaire, en fonction de la longueur d'onde.

Les mesures sont effectuées selon la norme ISO 14889:2002 spécifiant les exigences fondamentales pour les verres de lunettes finies non détourés.

Le facteur de transmission dans le visible Tv est de 74,03% avant vieillissement et de 73,85% après vieillissement.

Les taux de transmission en fonction des couleurs primaires sont :
- pour le rouge TSING (ROUGE) = 0,7739 soit Q(ROUGE)=104,54%
- pour le jaune TSING (JAUNE) = 0,7529 soit Q(JAUNE)=101,7%
- pour le vert TSING (VERT) = 0,7332 soit Q(VERT)=99,05%
- pour le bleu TSING (BLEU) = 0,7392 soit Q(BLEU)=99,85%

En dehors du spectre visible, l'oculaire selon l'invention présente les caractéristiques suivantes :
- taux de transmission maximal dans l'ultraviolet UVA (315 à 380 nanomètres) de 0,2%
- taux de transmission maximal dans l'ultraviolet UVB (280 à 315 nanomètres) de 0%.

## Revendications

1. - Lunettes pour réduire la fatigue visuelle lors du travail sur écran informatique par un sujet ne souffrant pas de troubles oculaires pathologiques, comportant deux oculaires teintés de puissance optique faible, **caractérisées en ce que** lesdits oculaires présentent une puissance comprise entre +0,15 dioptrie et +0,30 dioptrie et une teinte brunale dont le coefficient de transmission pour les longueurs d'ondes inférieures à 430 nanomètres est inférieur à 60%, et un facteur de transmission total dans le spectre visible d'environ 74%, l'oculaire étant réalisé en polycarbonate avec un traitement anti-reflet trois couches et revêtu d'un vernis anti-rayure siliconé.

2. - Lunettes selon la revendication 1, **caractérisées en ce que** le coefficient de transmission est respectivement d'environ 105% pour le rouge, de 102% pour le jaune, de 99% pour le vert et de 100% pour le bleu.

3. - Lunettes selon la revendication 1 ou 2, **caractérisées en ce que** le coefficient de transmission est d'environ 80% pour le spectre compris entre 500 et 650 nanomètres.

4. - Lunettes selon l'une quelconque des revendications précédentes, **caractérisées en ce que** lesdits oculaires présentent une puissance d'environ +0,25 dioptrie.

5. - Lunettes selon l'une quelconque des revendications 1 à 3, **caractérisées en ce que** lesdits oculaires présentent une puissance inférieure à +0,20 dioptrie.

## Revendications modifiées

### Revendications modifiées conformément à la règle 137(2) CBE.

**1.** - Lunettes pour réduire la fatigue visuelle lors du travail sur écran informatique par un sujet ne souffrant pas de troubles oculaires pathologiques, comportant deux oculaires teintés de puissance optique faible, **caractérisées en ce que** lesdits oculaires présentent une puissance comprise entre +0,15 dioptrie et +0,30 dioptrie et une teinte brunale dont le coefficient de transmission pour les longueurs d'ondes inférieures à 430 nanomètres est inférieur à 60%, et un facteur de transmission total dans le spectre visible d'environ 74%, l'oculaire étant réalisé en polycarbonate avec un traitement anti-reflet trois couches et revêtu d'un vernis anti-rayure siliconé.

**2.** - Lunettes selon la revendication 1, **caractérisées en ce que** le coefficient de transmission est respectivement d'environ 105% pour le rouge, de 102% pour le jaune, de 99% pour le vert et de 100% pour le bleu, lesdits coefficients de transmission étant considérés en rapport audit facteur de transmission total dans le spectre visible d'environ 74%.

**3.** - Lunettes selon la revendication 1 ou 2, **caractérisées en ce que** le coefficient de transmission est d'environ 80% pour le spectre compris entre 500 et 650 nanomètres.

**4.** - Lunettes selon l'une quelconque des revendications précédentes, **caractérisées en ce que** lesdits oculaires présentent une puissance d'environ +0,25 dioptrie.

**5.** - Lunettes selon l'une quelconque des revendications 1 à 3, **caractérisées en ce que** lesdits oculaires présentent une puissance inférieure à +0,20 dioptrie.
